# EUROPEAN PATENT APPLICATION

(11) **EP 4 847 167 A1**
(43) Date of publication of application: **02.12.2026**
(21) Application number: 25179825.2
(22) Date of filing: 30.05.2025
(51) Int. Cl.: B22F 10/22, B33Y 10/00, B33Y 70/00, C22C 38/00, C22C 38/02, C22C 38/20, C22C 38/32, C22C 38/38, C22C 38/42, C22C 38/54, C22C 38/58

(54) **AUSTENITIC PROTECTION STEEL**

(71) Applicant: Outokumpu Oyj, 00180 Helsinki (FI)
(72) Inventor: Erkkilä, Juha, 02330 Espoo (FI); Müller, Thomas, 45667 Recklinghausen (DE); Pilhagen, Johan, 11442 Stockholm (SE); Liebsch, Conrad, 47058 Duisburg (DE); Loren, Marcus, 75331 Uppsala (SE); Sanchez-Valverde, Andoni, 47798 Krefeld (DE); Lindner, Stefan, 47877 Willich (DE)

(57) **Abstract**

According to an example aspect, there is provided an austenitic protection steel, comprising iron, chromium and manganese and having a TWIP (TWinning Induced Plasticity) behavior under impact.

## Description

### Field

This invention pertains to advanced protection steels and materials used in resistant applications, including armored personnel carriers, security enclosures, and other defense-related structures as well as blast resistant applications. More specifically, the invention relates to austenitic stainless steels with a twinning-induced plasticity (TWIP) hardening mechanism.

### Background and objects

Protection steels traditionally rely on martensitic quenched and tempered alloys due to their high hardness. However, these materials suffer from limited weldability, low fracture toughness, and reduced workshop properties, making fabrication and structural integration challenging. Moreover, existing solutions tend to be ferromagnetic, which can increase vehicle detectability and interfere with communications systems. In general, materials with a high toughness but moderate strength like the present austenitic protection steel are more efficient in their protective behavior than high-strength but brittle state-of-the-art materials. The area under the stress-strain curve can be considered as an indicator, which shows the deformation energy absorbed until fracture, illustrated as energy per volume of material.

An object of the present invention is thus to mitigate at least some of the above-mentioned problems. The objective of this invention is to develop an austenitic stainless steel for protection applications, which offers toughness, corrosion resistance, and impact performance.

### Summary

The invention is defined by the features of the independent claims. Some specific embodiments are defined in the dependent claims.

According to a first aspect of the present disclosure, there is provided an austenitic protection steel, comprising iron, chromium and manganese and having a TWIP (TWinning Induced Plasticity) behavior under impact.

According to a second aspect of the present disclosure, there is provided a protective structure, comprising the austenitic protection steel.

According to a third aspect of the present disclosure, there is provided use of the austenitic protection steel in a protective structure.

According a fourth aspect of the present disclosure, there is provided a method for manufacturing a protection steel, comprising:
- providing spherical powder of the austenitic protection steel; and
- 3D printing of an object of the austenitic protection steel using Direct Energy Deposition (DED)

The present TWIP-hardening austenitic Cr-Mn alloyed steel provides a stainless steel for protection applications. The material hardens in-situ under impact stress, improving protection resistance and energy absorption.

The austenitic protection steels mitigate some of the drawbacks of martensitic protection steels by employing a TWIP hardening mechanism. This mechanism enables a dynamic increase in hardness upon impact without sacrificing toughness or fabrication flexibility. TWIP hardening mechanism improves toughness and impact performance over conventional martensitic steels. Furthermore, it provides a non-magnetic as well as non-magnetizable behavior in every material or component condition, even after forming, similar welding, machining or cutting. The same is valid for the life-time conditions: even after an impact or deformation, the material as well as the manufactured component is still non-magnetic. In the manufacturing viewpoint, superior bendability and fracture toughness provide flexibility and increase design alternatives.

Additionally, some austenitic protection steel alloys described herein have paramagnetic properties, which are combined with enhanced corrosion resistance, whereby they provide a superior alternative to conventional protection steels.

### Brief description of the drawings

FIGURE 1 illustrates a hardness of an austenitic protection steel in a cross-section of a MAG welded butt joint in accordance at least some embodiments;
FIGURE 2 illustrates an impact toughness of an austenitic protection steel in a longitudinal (L-T) and transverse (T-L) direction to main rolling direction in accordance at least some embodiments;
FIGURE 3 illustrates a hysteresis curve of a TWIP steel with the magnetic polarization J on the Y-axis and a magnetic field strength H on the X-axis in accordance at least some embodiments;
FIGURES 4A-C illustrates results from a 180° longitudinal bending test of an austenitic protection steel in accordance at least some embodiments;
FIGURES 5A and B illustrates results from an impact test of an austenitic protection steel in accordance at least some embodiments;
FIGURE 6 illustrates a microstructure of an austenitic protection steel in accordance at least some embodiments;
FIGURE 7 illustrates a microstructure of an austenitic protection steel with a forming degree of 20 % in accordance at least some embodiments;
FIGURE 8 illustrates a hardness profile of the 3D printed austenitic protection steel in accordance at least some embodiments; and
FIGURE 9 illustrates an image of an austenitic protection steel in accordance at least some embodiments.

### Detailed Description

### Definitions

In the present context, the term "protection steel" refers to a resistant steel, which can be used in defense applications, wherein mechanical protection and prevention against electrical or magnetic interference can be needed.

In the present context, the term "TWinning Induced Plasticity (TWIP) stainless steel" refers to a stainless steel having austenitic microstructure with face-centered cubic lattice (FCC), along with a relatively low stacking fault energy (SFE) of minimum > 22 mJ/m² and preferably between 24 - 28 mJ/m² promoting the activation of twinning deformation mechanism, i.e. mechanically induced twinning in the crystal lattice. A twinning in the microstructure of a metal material is in general defined as two separate crystals that share some of the same crystal lattice. The term TWIP indicates that twinning often goes along with accommodation plasticity via lattice dislocations.

In the present context, the term "TWIP behaviour" refers to the change in the microstructure of the present protective steel or of a component made from it by twinning. Thereby, the fully austenitic microstructure does not change itself when external forming energy is applied, but at the same time twins are formed depending on the degree of deformation acting on the material. As more intensive and as faster the forming energy is applied, as higher is the twinning and the resulting twin density in the material. These twins act like grain boundaries and an increasing twin density leads to an increasing hardening of the material or component made from it. The effect of transforming forming energy into twinning act locally. Summarizing, the energy introduced from outside on the material is absorbed in the form of twinning. Forming energy acting on the material from the outside can occur during material production in the form of (cold-)rolling or stretching, or during component manufacturing in form of cutting, machining or cold-forming like bending, deep-drawing, tube or profile forming, high-pressure or hydroforming or shaping indentations or corrugations. Further forming energy acting on the material from the outside can occur also during component's lifetime in the frame of, for example, an impact, a crash, an explosion, a detonation or a blast. The twins in the microstructure and the connected material hardening can be reversed by solution annealing temperatures above 1050 °C.

Weight percentages (wt-%) refer to the weights in the total composition.

### Embodiments

According to an aspect, there is provided an austenitic protection steel of austenitic alloy steel comprising iron, chromium and manganese and having a TWIP (TWinning Induced Plasticity) behavior under impact.

The present austenitic protection steel provides considerable advantages. The austenitic protection steel is manufactured using an austenitic stainless steel alloy containing chromium (Cr) and manganese (Mn) and has high-energy absorption during protection events. Unlike conventional high-hardness steels, this material undergoes microstructural twinning upon impact, dramatically enhancing its strength and resistance without requiring pre-hardening treatments. The austenitic protection steel has a superior ductility and high strength after plastic deformation utilizing in the cold deformation the TWIP (TWinning Induced Plasticity) mechanism. The austenitic protection steel combines thus a high strength in the initial annealed state and a high work hardening rate with a high elongation after the cold deformation, such as cold rolling, in connection with a low nickel content. This provides good resistance against ballistic impact as TWIP mechanism resists deformation but does not cause transformation to martensite that would cause brittleness and magnetization. Martensite formation decreases ballistic resistance performance as it may lead to catastrophic destruction of structure caused by embrittlement and high hardness.

Compared to traditional martensitic steels, the present austenitic protection steel can have enhanced lifespan due to the superior corrosion resistance. Natural and re-passivating passivation layers on top of the surface are working together with the painting to create a corrosion protection system.

The austenitic protection steel can have tighter bending radii (~0.5x material thickness) and excellent weldability.

The austenitic protection steel can have resistance against adiabatic heating due to high strain rates.

In the case of weldability, the austenitic protection steel can have a ductile fracture behavior, a high energy absorption inside welds under every direction of loading, and no sensitivity to hot-cracking due to Mn-alloying concept. Due to a fully austenitic and therefore though microstructure, the austenitic protection steel may not have sensitivity for cold-cracking, hardness increase, hardness jumps or metallurgical notch. The effect of twinning also takes place in similar welded structures whereby areas with lower amounts of twins react more intensive in hardening. Furthermore, the present austenitic protection steel offers, due to its high stacking fault energy and its fully austenitic microstructure without any martensite, in every condition no susceptibility for delayed cracking or hydrogen-induced stress cracking.

According to an embodiment, the austenitic protection steel comprises at least 7.5 wt-% chromium and 14-26 wt-% manganese. The content of chromium can be set to a minimum of 7.5 wt%, to produce a stainless steel. The manganese content can be rather high, preferably in order of 14-26 wt-%, more preferably 15-21 wt-%.

According to an embodiment, the austenitic protection steel comprises 10.5-18 wt-% chromium and 14-20 wt-% manganese.

According to an embodiment, the austenitic protection steel contains 0.03-0.1 wt-% carbon, 0.08-1.0 wt-% silicon, 14-26 wt-% manganese, 7.5-18 wt-% chromium, less than 0.8 wt-% nickel, 0.05-0.6 wt-% copper, 0.1-0.8 wt-% nitrogen and 0.0008-0.005 wt-% boron, the rest being iron and inevitable impurities.

According to an embodiment, the austenitic protection steel is capable to cold deform utilizing the TWIP (TWinning Induced Plasticity) mechanism.

According to an embodiment, a bending radius is smaller than 5, preferable smaller than 2, more preferably smaller than 0.5, of a material thickness of the austenitic protection steel.

According to an embodiment, the austenitic protection steel has a yield strength of 470-600 MPa and a tensile strength of 800-930 MPa.

The austenitic protection steel can have a hardness of 250-300 HV, such as 270 HV. The austenitic protection steel can achieve properties that are close to those of a hard protection steel having a hardness of 500 HB.

The austenitic protection steel can have Charpy-V impact toughness of over 110 J in a longitudinal direction and over 200 J in a transverse direction (at -40°C test temperature). The Charpy-V impact toughness can be measured according to a standard ISO 148-1.

According to an embodiment, the austenitic protection steel has paramagnetic properties defined by a relative permeability of µᵣ ≤ 1.01 H/m and an electrical conductivity between 1.20 ≤ k ≤ 1.36 m/(Ω·mm²).

The austenitic protection steel can be manufactured in coils or plates, which preferably have a thickness of 0.5-100 mm.

According to an aspect, there is provided a protective structure, comprising the austenitic protection steel.

According to an aspect, there is provided use of the austenitic protection steel in a protective structure.

According to an embodiment, the protective structure is a roller shutter, a door, a gate, a window frame, a stationary or removable protective barrier or wall, a machine housing for rotating applications, such as a tooling machine housing, an engine housing, such as a housing for an aircraft, a protective structure of a spacecraft or a satellite, an electrical cabinet, a bollard, a vault, a military vehicle or an armored personnel carrier.

According to an embodiment, the protective structure is a single-layer construction containing the protection steel or a multilayer material composition comprising the protection steel, i.e., at least one part of portion of the multilayer material composition comprises the protection steel.

The austenitic protection steel can be manufactured by an additive manufacturing (powder-based production), e.g. utilizing direct energy deposition (DED) techniques for custom-shaped structures.

According to an aspect, there is provided a method for manufacturing an austenitic protection steel, comprising:
- providing spherical powder of the austenitic protection steel; and
- 3D printing an object of the austenitic protection steel using Direct Energy Deposition (DED).

According to an embodiment, the method further comprises annealing the printed object of the austenitic protection steel at a temperature of 1080 °C. This results in a low-porosity microstructure having a relative density greater than 99.8 %, thereby enhancing mechanical performance of the printed object.

According to an embodiment, the printed object of the austenitic protection steel has a uniform hardness profile throughout the object. This results in enhanced mechanical properties of the printed object.

The austenitic protection steel can be manufactured by a flat product fabrication. The austenitic protection steel can be processed via rolling techniques to achieve various thickness ranges for producing flat products such as coils, strips, plates or sheets.

The austenitic protection steel can be manufactured by conventional methods for producing slabs, blooms and billets.

The austenitic protection steel can be manufactured by conventional methods for producing long products, such as bars, rods, wires, profiles, shapes and tubular products, such as pipes or tubes.

The austenitic protection steel can be manufactured by a heat treatment process, for example, by a thermal processing at about 1080 °C followed by rapid water cooling.

### Detailed Description of The Drawings

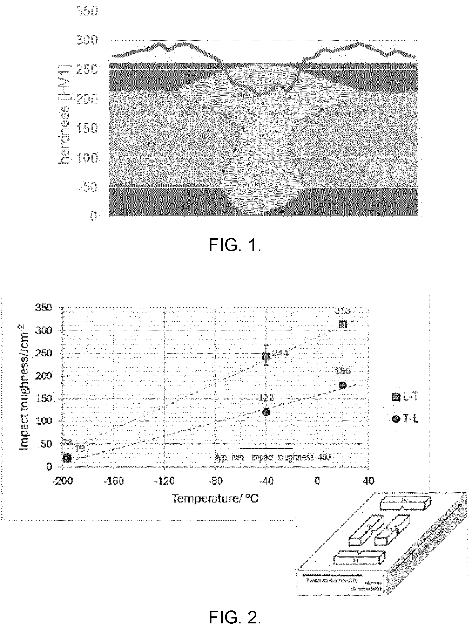

FIGURE 1 illustrates a hardness profile of a 3.5mm thick austenitic protection steel in a cross-section of a MAG welded butt joint with austenitic filler 1.4370/ER307 (Thermanit X) without preheating in accordance at least some embodiments. The picture shows the hardness curve corresponding to the material strength in the base material and in the filler metal and no hardness jumps in the heat-affected zone but a smooth continuous hardness transition between the base material and the weld metal.

FIGURE 2 illustrates an impact toughness of an austenitic protection steel in a longitudinal (L-T) and transverse (T-L) direction to main rolling direction in accordance at least some embodiments. The impact toughness is higher in the longitudinal direction than the transverse direction. The impact toughness decreases with a temperature.

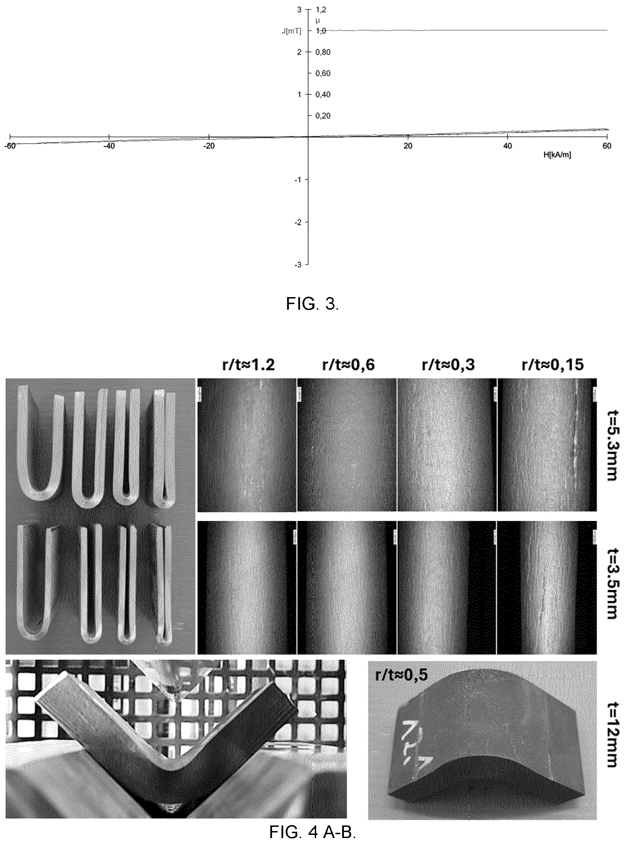

FIGURE 3 illustrates a hysteresis curve of a TWIP steel with the magnetic polarization J on the Y-axis and a magnetic field strength H on the X-axisin accordance at least some embodiments. The hysteresis curve does not show a pronounced hysteresis loop in the direction of the magnetic polarization J. The TWIP steel has a relative permeability (µᵣ) of 1.00549 and an electrical conductivity (k) of 1.24 m/(Ω·mm²).

FIGURES 4A-B illustrate bendability of an austenitic protection steel in transverse direction (bending axis parallel to rolling direction) for various thicknesses, bending radii and bending angles. Figure 4A illustrates 180° bends of an austenitic protection steel with 1D surface in transverse direction for thicknesses 5.3 mm and 3.5 mm indicating no micro-cracks for r/t≥0.3. Figure 4B illustrates 90° bending of an austenitic protection steel with as-rolled surface in transverse direction for thickness 12 mm indicating no micro-cracks for r/t≈0.5.

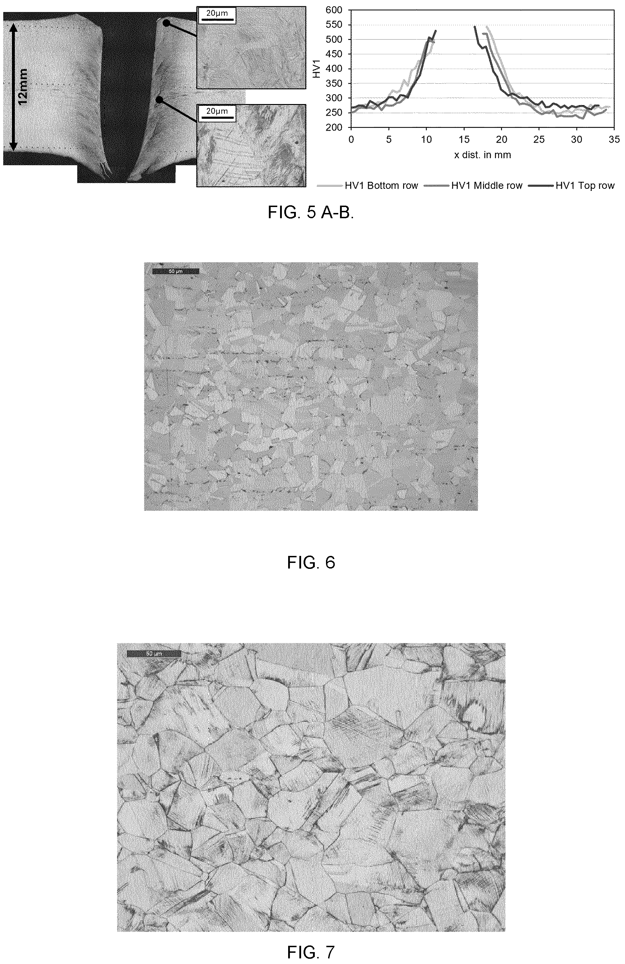

FIGURES 5 A-B illustrates results from an impact test of an austenitic protection steel in accordance at least some embodiments. The impact test was conducted at a temperature of 10°C with an impact velocity of 700 m/s (STANAG lvl2 velocity) on 12 mm thick "SheldX^{©}" steel. FIGURE 5A shows microscope images showing the TWIP effect. FIGURE 5B shows respective hardness measurements highlighting the excellent strain hardening properties of the material.

FIGURE 6 illustrates a microstructure of an austenitic protection steel in accordance at least some embodiments. The steel has some twins inside grains. The austenitic protection steel was annealed for 40 min at a temperature of 1080 °C.

FIGURE 7 illustrates a microstructure of an austenitic protection steel with a forming degree of 20 % in accordance at least some embodiments. The steel has some twins inside grains.

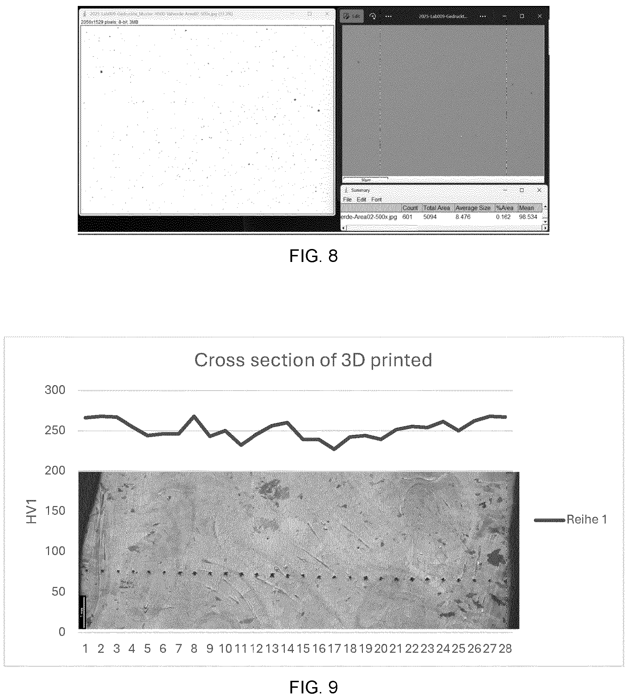

FIGURE 8 illustrates a hardness profile of the 3D printed austenitic protection steel, showing a stable hardness of HV250 assuring consistent mechanical properties thoroughly.

FIGURE 9 illustrates an image of an austenitic protection steel showing low porridge and therefore high relative density of the austenitic protection steel. A treshold of colours is used to determine the porosity level.

### Examples

### Example 1

An example of one composition of a protection steel is described in more detail below.

The protection steel is an austenitic high-manganese steel having a composition of 0.03-0.4 wt-% carbon, 0.08-1.0 wt-% silicon, 14-26 wt-% manganese, 10.5-18 wt-% chromium, less than 0.8 wt-% nickel, 0.05-0.6 wt-% copper, 0.1-0.8 wt-% nitrogen and 0.0008-0.005 wt-% boron, the rest being iron and inevitable impurities occurred in stainless steels.

The austenitic protection steel may further contain optionally 0.001-0.02 % titanium and optionally less than 0.04 % aluminum.

The ranges for the yield strength Rp0.2 and the tensile strength Rm as well as the elongation to fracture A80 at the annealed state for the austenitic protection steel are 470-650 MPa for Rp 0.2, 800-1030 MPa for Rm and 40-60 % for A80 after annealing at the temperature range of 1000-1150°C. When the protection steel was further cold deformed, such as cold rolled, the effect of TWIP (TWinning Induced Plasticity) mechanism can be shown by means of the respective ranges for the yield strength Rp0.2 and the tensile strength Rm as well as the elongation to fracture A80 enlisted in the following Table 1 after the cold rolling with the reduction degrees of 10 % and 20 %.

**Table 1. A yield strength (Rp0.2), a tensile strength (Rm) and an elongation to fracture (A80) of the austenitic protection steel.**

| Deformation degree | Rp0.2 (MPa) | Rm (MPa) | A80 (%) |
|---|---|---|---|
| 0 % | 470-650 | 800-1030 | 40-60 |
| 10 % | 780-920 | 900-1100 | 25-35 |
| 20 % | 970-1150 | 1100-1300 | 10-20 |

The austenitic protection steel has a high work-hardening rate of at least 20 % with the deformation degree 10 % and at least 40 % with the deformation degree 20 % for the yield strength Rp0.2. Further, the elongation to fracture A80 is 25-35 % with the deformation degree 10 % and 10-20 % with the deformation degree 20 % showing the good ductility. This provides good resistance against impacts.

The effects of the main elements in the chemical composition of the austenitic high-manganese steel are described below, the ranges being in weight %, if not otherwise mentioned.

Carbon (C) is a valuable austenite forming and stabilizing element, which enables reduced use of expensive elements nickel and copper. The upper limit for carbon alloying (less than 0.1 %) is set by the risk of carbide precipitation, which deteriorates the corrosion resistance of the steel. The carbon content is low enough to maintain good corrosion resistance. The reduction of the carbon content to low levels by the decarburization process is non-economical, and therefore, the carbon content shall preferably not be less than 0.03 %.

Silicon (Si) is added to steels for deoxidizing purposes during melting and should not be below 0.08 %. Because silicon is a ferrite forming element, its content is preferably limited below 1 %.

Manganese (Mn) is a key element of the austenitic protection steel, ensuring the stable austenitic crystal structure and enabling the twinning mechanism and, further, the reduction of the use of more expensive nickel. Manganese also increases the solubility of nitrogen to the steel. Plastic deformation accompanied with twinning deformation easily occurs in the case of an amount of manganese of 14 % or more without deformed structure, i.e. the strain-induced martensite. A high manganese content makes the decarburization process of the steel more difficult, impairs the surface quality and reduces the corrosion resistance of the steel. Therefore, the manganese content shall be less than 26 %.

Chromium (Cr) is responsible of ensuring corrosion resistance of a stainless steel. Therefore, the chromium content in this stainless steel shall be at the minimum 10.5 %. Chromium is important in terms of avoiding the delayed cracking phenomenon. By increasing the content from this level the corrosion resistance of the steel can be improved. However, because chromium is a ferrite forming element, the increasing of the chromium content increases the need for expensive austenite formers, such as nickel and manganese or necessitates impractically high carbon and nitrogen contents. Therefore, the chromium content shall be lower than 18 %. Chromium also increases the solubility of nitrogen. In the present austenitic protection steel, chromium is used to set the SFE (stacking fault energy) necessary for the TWIP effect as well as to increase the solubility of nitrogen.

Nickel (Ni) is a strong austenite former and stabilizer, but nickel is an expensive element. However, very low nickel contents would necessitate impractically high alloying with the other austenite forming and stabilizing elements. Therefore, the nickel content shall be preferably lower than 0.8 % but preferably less than 0.5 %.

Copper (Cu) is present as a residual of 0. 1-0.6 %. Copper is a weak stabilizer of the austenite phase but, however, has a strong effect on the resistance to martensite formation. Copper also has a positive effect on ductility and forming properties.

Nitrogen (N) is a strong austenite former and stabilizer. Therefore, nitrogen alloying improves the cost efficiency of the steel by enabling lower use of nickel and copper. In order to ensure reasonably low use of the above-mentioned alloying elements, nitrogen content shall be at least 0.1 %. High nitrogen contents increase the strength of the steel and thus make forming operations more difficult. Furthermore, risk of nitride precipitation increases with increasing nitrogen content. For these reasons, the nitrogen content shall not exceed 0.8 %, preferably the nitrogen content shall be lower than 0.6 %. Nitrogen increases the stacking fault energy (SFE), which is used for the prediction of the TWIP-effect and thus enables for and facilitates the TWIP-effect.

The austenitic protection steel does not form during cold rolling any deformation martensite at the room temperature or above. Therefore, this stainless steel has a high ductility. The austenitic protective austenitic stainless steel is also free of stress corrosion cracking and delayed cracking, just even after aging process in air and also in 5 % sodium chloride (NaCl) environment.

### Example 2

An austenitic stainless steel was melted in the production scale and then cast into a slab form with a chemical composition shown in Table in weight-%.

**Table 2. A composition of an austenitic stainless steel for producing a protection steel.**

| Melt | C | Si | Mn | Cr | Mo | Ni | Ti | Cu | Al | N | B |
|---|---|---|---|---|---|---|---|---|---|---|---|
| 1 | 0.08 | 0.5 | 20 | 13 | 0.02 | 0.2 | 0.003 | 0.5 | 0.01 | 0.43 | 0.023 |
| 2 | 0.31 | 0.39 | 15.91 | 14.01 | 0.05 | 0.35 | 0.003 | 0.5 | 0.01 | 0.33 | 0.002 |
| 3 | 0.20 | 0.41 | 25 | 8.0 | 0.5 | - | 0.003 | 0.3 | 0.01 | 0.20 | 0.002 |

The slabs were further hot rolled into the thickness of 4.0 mm and then annealed at the temperature of 1080 °C. The austenitic stainless steel was further cold rolled with the rolling degree of 50 % to the thickness of 2.0 mm and annealed at the temperature 1080 °C. The annealed strip product was then tested by determining the yield strength Rp0.2 and the tensile strength Rm as well as the elongation to fracture A80.

In order to utilize the TWIP effect in the austenitic stainless steel and to produce a protection steel, the stainless steel strip was cold deformed with the reduction degree of 10 % and then determined the yield strength Rp0.2 and the tensile strength Rm as well as the elongation to fracture A80. The respective actions were also made for the cold deformed strip having the reduction degree of 20 %. The results for those test results are described in Table 3.

**Table 3. A yield strength (Rp0.2), a tensile strength (Rm) and an elongation to fracture (A80) of the protection steel with a reduction degree of 0%, 10% and 20%.**

| Reduction degree | Rp0.2 (MPa) | Rm (MPa) | A80 (%) |
|---|---|---|---|
| 0 % | 500 | 830 | 48 |
| 10 % | 800 | 950 | 28 |
| 20 % | 1020 | 1180 | 14 |

The results show that the austenitic stainless steel has high work-hardening rate for the yield strength Rp0,2. Further, the elongation to fracture A80 is 28 % with the deformation degree 10 % and 14 % with the deformation degree 20 % shows still a good ductility at high strength after cold rolling.

### Example 3

Table 4 presents the porosity and relative density (%) of the 3D-printed protective steel. The porosity was determined using an imaging tool that applies a color threshold to assess the porosity level, as specified by equation 1.

Imaging methods often involve analyzing 2D (or 3D volumes) to quantify porosity, and then $Relative Density = 1 - \left({V}_{pores}/{V}_{total}\right) = \left({V}_{solid}/{V}_{total}\right)$ (1) Where:
Vₚₒᵣₑₛ = volume (or area in 2D) of pores
Vₜₒₜₐₗ = total volume (or area) of the region analyzed
V_{solid} = volume (or area) occupied by solid material.

Figure 9 illustrates this process. The steel composition matches the range given in Example 1. The 3D printed protection steel was manufactured from an austenitic steel alloy comprising. The 3D printed protection steel was manufactured by a direct energy deposition (DED) technique. The relative density of the 3D printed protection steel is above 99.8%, having therefore a good printability behavior.

**Table 4. A porosity and a relative density (%) of a 3D printed protection steel.**

| | Porosity | Relative Density (%) |
|---|---|---|
| Printed Sample area 1 | 0.162 | 99.84 |
| Printed Sample area 2 | 0.154 | 99.85 |
| Printed Sample area 3 | 0.164 | 99.84 |
| Average | **0.16** | **99.84** |
| STD | 0.01 | 0.01 |

### Industrial Applicability

The present embodiments are suited for civil and non-civil protection applications exposed to ballistic threats and blast, including armored vehicles, recovery vehicles, passive drone protection systems, passive mine protection systems, armored truck cabins, with increased safety requirements, -resistant panels, civil protected vehicles like limousines, all terrain cars and value transports, safe rooms, and high-security enclosures, but also stationary as well as removable protective barriers and protective walls, safety doors, gates window frames, façades, machine housings and machine covers for rotating applications (especially tooling machine housings), engine housings (especially for aircrafts), protection of spacecraft and satellites. Additionally, it extends to aerospace applications and additive manufacturing for specialized military components as well as blast protection structures. With its non-magnetic and non-magnetizable properties, the protection steel of the present invention is also suitable for electrical cabinets which require beside mechanical protection also prevention against electrical or magnetic interference. The present austenitic protection steel can be thereby used due to its toughness and protection properties as a protective structure having a single-layer construction. Furthermore, the usage as a multilayer material composition where the protection steel of the present invention is one part of, is suitable but the invention is not used as a personal protection or body armor as such.

Typically, the protection steel of the present invention would be layered together with ceramics, aramid fibers or conventional martensitic quenched and tempered steels whereby the protection steel of the present invention would be the preferred inner-layer due to its ductility, toughness and energy absorption. The hard but brittle outer-layers breaks e.g. a bullet and the ductile protection steel of the present invention layer absorbs the kinetic energy and collects splinters. During the melting process, electromagnetic stirring breaks the dendrites during solidification and makes the material more homogeneous to achieve better toughness and energy-absorbing properties.

## Claims

1. An austenitic protection steel, comprising iron, chromium and manganese and having a TWIP (TWinning Induced Plasticity) behavior under impact.

2. The austenitic protection steel of claim 1, comprising at least 7.5 weight-% chromium and 14 - 26 wt- % manganese.

3. The austenitic protection steel of claim 2, comprising 7.5 - 18 wt-% chromium and 14 - 26 wt-% manganese.

4. The austenitic protection steel of claim 1, comprising 0.03 - 0.1 wt-% carbon, 0.08 - 1.0 wt-% silicon, 14 - 20 wt-% manganese, 10.5 - 18 wt-% chromium, less than 0.8 % nickel, 0.05 - 0.6 % copper, 0.1 - 0.8 % nitrogen and 0.0008 - 0.005 % boron, the rest being iron and inevitable impurities.

5. The austenitic protection steel of claim 4, being capable to cold deform utilizing the TWIP (TWinning Induced Plasticity) mechanism.

6. The austenitic protection steel of any one of the preceding claims, having a bending radius smaller than 5, preferably smaller than 2, more preferably smaller than 1, of a material thickness of the protection steel.

7. The austenitic protection steel of any one of the preceding claims, having a yield strength of 470-600 MPa and a tensile strength of 800-930 MPa.

8. The austenitic protection steel of any one of the preceding claims, having paramagnetic properties defined by a relative permeability of µᵣ ≤ 1.01 H/m and an electrical conductivity between 1.20 ≤ k ≤ 1.36 m/(Ω·mm²).

9. A protective structure, comprising the austenitic protection steel according to any one of the preceding claims 1 - 8.

10. Use of the austenitic protection steel according to any one of the preceding claims 1 - 8 in a protective structure.

11. The use of claim 10, wherein the protective structure is a roller shutter, a door, a gate, a window frame, a stationary or removable protective barrier or wall, a machine housing for rotating applications, such as a tooling machine housing, an engine housing, such as a housing for an aircraft, a protective structure of a spacecraft or a satellite, an electrical cabinet, a bollard, a vault, a military vehicle or an armored personnel carrier.

12. The use of claim 10 or 11, wherein the protective structure is a single-layer construction containing the protection steel or a multilayer material composition comprising the protection steel.

13. A method for manufacturing an austenitic protection steel, comprising:
- providing spherical powder of the austenitic protection steel of any one of the preceding claims 1-8; and
- 3D printing an object of the austenitic protection steel using Direct Energy Deposition (DED).

14. The method of claim 13, further comprising annealing the printed object of the austenitic protection steel at a temperature of 1080 °C.

15. The method of claim 14, wherein the printed object of the austenitic protection steel has an uniform hardness profile throughout the object.
